# EUROPÄISCHE PATENTSCHRIFT

(11) **EP 1 083 308 B1**
(45) Veröffentlichungstag und Bekanntmachung des Hinweises auf die Patenterteilung: **13.09.2006**
(21) Anmeldenummer: 00115815.3
(22) Anmeldetag: 22.07.2000
(51) Int. Cl.: F01P 7/16, F01P 3/20

(54) **Kühleinrichtung für eine Brennkraftmaschine**
Cooling device for an internal combustion engine
Dispositif de refroidissement pour un moteur à combustion interne

(30) Priorität: 09.09.1999 DE 19943004
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Wolter, Artur, 70806 Kornwestheim (DE); Neumann, Heiner, 75446 Wiernsheim (DE); Hochkönig, Manfred, 71696 Möglingen (DE)

(56) Entgegenhaltungen:
- EP-A- 0 860 592
- EP-A- 0 870 911
- EP-A- 0 900 924
- DE-A- 4 033 796
- GB-A- 2 008 241
- US-A- 5 980 340

## Beschreibung

Die Erfindung bezieht sich auf eine Kühleinrichtung für eine Brennkraftmaschine nach dem Oberbegriff des Patentanspruchs 1.

Es ist eine Vorrichtung zur Temperierung des Getriebeöls bekannt, EP 0 787 929 A2, die mit einem Kühler einer flüssigkeitsgekühlten Brennkraftmaschine zusammenwirkt. Mit dieser Vorrichtung wird angestrebt die Temperatur des Gertriebeöls auf einem definierten Niveau zu halten.

Die EP 0 785 379 A2 beschreibt ein Getriebe-Kühlungs-System, das einen Wärmetauscher aufweist. Dieser Wärmetauscher ist in einen Ölsumpf eines mit einer flüssigkeitsgekühlten Brennkraftmaschine verblockten Getriebegehäuse integriert.

Aufgabe der Erfindung ist es, eine Kühleinrichtung für eine Brennkraftmaschine mit einem Wärmetauscher zur Kühlung von Öl eines Getriebes zu schaffen, bei welcher der Wärmetauscher auf baulich einfache Weise in den Kühlkreislauf installiert ist und das Getriebeöl gezielt gekühlt wird.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß zum einen der Wärmetauscher zur Kühlung von Motoröl sich auf einfache Weise in den Kühlkreislauf der Kühleinrichtung einbauen läßt und zum anderen gezielt beaufschlagt wird, was der Strömungswiderstand unterstützt. Dieser Strömungswiderstand ist ein Thermostat, der in der Warmlaufphase der Brennkraftmaschine den Kühlkreislauf kurzschließt, wobei ein Druckverlust am Thermostat ausgenutzt wird um ein ausreichendes Druckgefälle für die Funktion des Wärmetauschers in der Abzweigungsleitung zu erzeugen. Das Absperrventil in der Abzweigungsteitung stellt sicher, daß die Temperatur des Öls im Getriebe bei Erreichen der Betriebstemperatur der Brennkraftmaschine unabhängig vom Kühlkreislauf zwischen den Kühler und Brennkraftmaschine beeinflußbar ist, dergestalt, daß der Wärmetauscher erst dann wirksam wird, wenn die Temperatur des Getriebeöls einen vorbestimmten Wert, der für den Kraftstoffverbrauch der Brennkraftmaschine relevant sein kann, erreicht hat.

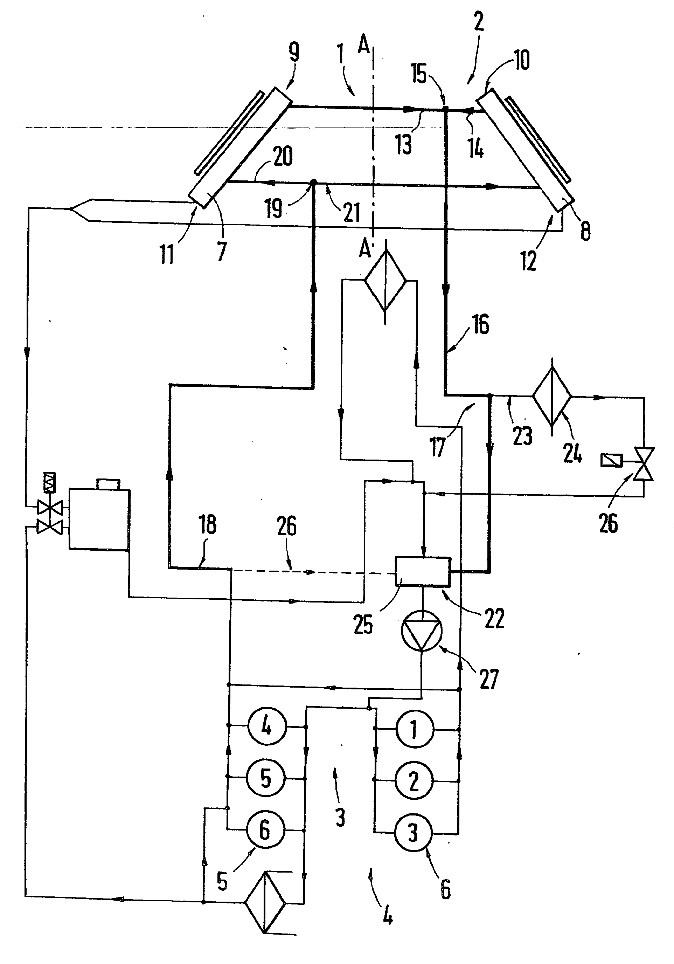

Die Erfindung wird nachstehend anhand einer eine einzige Figur umfassenden Zeichnung näher beschrieben. Diese Figur gibt eine schematische Ansicht eines Kraftfahrzeugs von oben wieder.

Im Bug 1 eines nicht näher dargestellten Kraftfahrzeugs ist eine Kühleinrichtung 2 für eine Brennkraftmaschine 3 vorgesehen. Die Brennkraftmaschine 3 kann in einem Heck 4 oder benachbart von diesem - Mittelmotor - Bauart - im Kraftfahrzeug angeordnet sein, und sie weist gegenüberliegende Zylinderreihen 5 und 6 auf. Die Kühleinrichtung 2 umfaßt zwei Kühler 7, 8 die schräg zu einer Mittellängsebene A - A des Kraftfahrzeugs verlaufen. Dabei liegen die Vorderseiten 9, 10 der Kühler 7, 8 näher an der Mittellängsebene A - A als deren Rückseiten 11, 12.

Die Kühler 7, 8 sind mit Kühlwasseraustrittsleitungen 13, 14 an eine Sammeleinrichtung 15 angeschlossen, die mit einer Zuführungsleitung 16 mit Zylindern der beiden Zylinderreihen 5 und 6 verbunden ist. Durch diese Gestaltung ergib sich ein Kühlkreislauf 17. Den Zylindern der Brennkraftmaschine nachgeschaltet ist eine Rückführungsleitung 18, die zu einer Verzweigungseinrichtung 19 führt. Zwischen der Verzweigungseinrichtung 18 und den Kühlem 7, 8 sind Kühlwasserrückführungsleitungen 20, 21 verlegt.

In die Zuführungsleitung 16 ist vor der Brennkraftmaschine ein Strömungswiderstand 22 geschaltet, und zwischen Kühleinrichtung 2 und dem Strömungswiderstand 22 ist von der Zuführungsleitung 16 eine Abzweigungsleitung 23 weggeführt, über die einem Wärmetauscher 24 Kühlmedium des Kühlkreislaufs 17 zugeführt wird. Der Strömungswiderstand 22 wird durch einen Thermostat 25 gebildet, mit dem in der Warmlaufphase der Brennkraftmaschine 3 ein Kurzschluß 26 und eine gezielt rasche Betriebstemperatur der besagten Brennkraftmaschine 3 bewirkt wird. Der Wärmetauscher 24 dient zur Kühlung von Öl eines nicht dargestellten Getriebes des Kraftfahrzeugs, und die Abzweigungsleitung 23 ist stromab hinter dem Wärmetauscher 24 an den Strömungswiderstand 22 bzw. den Thermostat 25 angeschlossen. Darüber hinaus ist in die Abzweigungsleitung 23, und zwar zwischen Wärmetauscher 24 und Thermostat 25, ein Absperrventil 26 geschaltet. Mit diesem elektrisch betätigten Absperrventil 26 kann die Temperatur des Getriebeöls unabhängig vom Kühlkreislauf beeinflußt werden. Als Parameter für die Steuerung des 26 Absperrventils, das in der Warmlaufphase der Brennkraftmaschine gesperrt ist, dient die Ölsumpftemperatur, gegebenenfalls auch noch die Austrittstemperatur der Brennkraftmaschine 3.

Schließlich wird der Kühlwasserumlauf der Kühleinrichtung mit einer Wasserpumpe 27 bewerkstelligt, die zwischen der Brennkraftmaschine 3 und dem Strömungswiderstand 22 bzw. dem Thermostat 25 angeordnet ist.

## Patentansprüche

1. Kühleinrichtung für eine Brennkraftmaschine, die in ein Kraftfahrzeug, insbesondere Personenkraftwagen, eingebaut ist und wenigstens einen von Kühlwasser durchströmten in einem Kühlkreislauf angeordneten über eine Zuführungsleitung und eine Rückführungsleitung mit der Brennkraftmaschine verbundenen Kühler umfaßt, welcher Kühlkreislauf einen Wärmetauscher zur Kühlung von Öl eines Getriebes, vorzugsweise Automatikgetriebes, aufweist, **dadurch gekennzeichnet, daß** in die Zuführungsleitung (16) vor der Brennkraftmaschine (3) ein Strömungswiderstand (22) geschaltet ist, wobei von der Zuführungsleitung (16) eine mit dem Wärmetauscher (24) des Getriebes verbundene Abzweigungsleitung (23) weggeführt ist, die stromab hinter dem Wärmetauscher (24) an den Strömungswiderstand (22) angeschlossen ist.

2. Kühleinrichtung nach Anspruch 1, **dadurch gekennzeichnet, daß** in die Abzweigungsteitung (23) stromab hinter dem Wärmetauscher (24) ein Absperrventil (27) geschaltet ist, das temperaturabhängig gesteuert wird.

3. Kühleinrichtung nach Anspruch 2, **dadurch gekennzeichnet, daß** das Absperrventil (27) zumindest mittels der Ölsumpftemperatur des Getriebes geschaltet wird.

4. Kühleinrichtung nach Anspruch 2, **dadurch gekennzeichnet, daß** das Absperrventil (27) elektrisch betätigt wird.

5. Kühleinrichtung nach Anspruch 1, **dadurch gekennzeichnet, daß** der Strömungswiderstand (22) ein den Kühlkreislauf in der Warmlaufphase der Brennkraftmaschine (1) kurzschließende Thermostat (25) ist.

6. Kühleinrichtung nach Anspruch 5, **dadurch gekennzeichnet, daß** zwischen Thermostat (25) und Brennkraftmaschine (3) eine den Kühlwasserumlauf bewirkende Wasserpumpe (27) angeordnet ist.

## Claims

1. A cooling device for an internal-combustion engine, which cooling device is installed in a motor vehicle, especially a passenger vehicle, and comprises at least one radiator, through which cooling water flows, which is arranged in a cooling circuit and which is connected to the internal-combustion engine via a supply line and a return line, which cooling circuit has a heat exchanger for cooling a transmission oil, preferably of an automatic transmission, **characterised in that** a flow resistor (22) is arranged in the supply line (16) upstream of the internal-combustion engine (3), wherein a branch line (23), which is connected to the heat exchanger (24) of the transmission, leads away from the supply line (16) and is connected to the flow resistor (22) downstream of the heat exchanger (24).

2. A cooling device according to claim 1, **characterised in that** a shut-off valve (27) [*sic* - (26)] is arranged in the branch line (23) downstream of the heat exchanger (24) and is controlled in a temperature-dependent manner.

3. A cooling device according to claim 2, **characterised in that** the shut-off valve (27) [*sic* - (26)] is switched at least by means of the oil-sump temperature of the transmission.

4. A cooling device according to claim 2, **characterised in that** the shut-off valve (27) [*sic* - (26)] is electrically operated.

5. A cooling device according to claim 1, **characterised in that** the flow resistor (22) is a thermostat (25) which short-circuits the cooling circuit in the warm-up phase of the internal-combustion engine (1) [*sic*- (3)].

6. A cooling device according to claim 5, **characterised in that** a water pump (27), which effects circulation of the cooling-water, is arranged between the thermostat (25) and the internal-combustion engine (3).

## Revendications

1. Dispositif de refroidissement pour un moteur à combustion interne qui est monté dans un véhicule automobile, en particulier une voiture de tourisme, et comprend au moins un radiateur traversé par de l'eau de refroidissement et disposé dans un circuit de refroidissement, relié au moteur à combustion interne par une conduite d'amenée et une conduite de retour, lequel circuit de refroidissement comporte un échangeur de chaleur pour le refroidissement de l'huile d'une transmission, de préférence une transmission automatique, **caractérisé en ce que** dans la conduite d'amenée (16) une résistance à l'écoulement (22) est montée en amont du moteur à combustion interne (3), une conduite de dérivation (23), reliée à l'échangeur de chaleur (24) de la transmission, partant de la conduite d'amenée (16) et étant raccordée en aval, derrière l'échangeur de chaleur (24), à la résistance à l'écoulement (22).

2. Dispositif de refroidissement selon la revendication 1, **caractérisé en ce que** dans la conduite de dérivation (33) est montée, en aval, derrière l'échangeur de chaleur (24), une soupape d'arrêt (27) qui est commandée en fonction de la température.

3. Dispositif de refroidissement selon la revendication 2, **caractérisé en ce que** la soupape d'arrêt (27) est commandée au moyen de la température du carter d'huile de la transmission.

4. Dispositif de refroidissement selon la revendication 2, **caractérisé en ce que** la soupape d'arrêt (27) est actionnée électriquement.

5. Dispositif de refroidissement selon la revendication 1, **caractérisé en ce que** la résistance hydraulique (22) est un thermostat (25) court-circuitant le circuit de refroidissement dans la phase de fonctionnement à chaud du moteur à combustion interne 1.

6. Dispositif de refroidissement selon la revendication 5, **caractérisé en ce qu'**une pompe à eau (27) provoquant la circulation de l'eau de refroidissement est disposée entre le thermostat (25) et le moteur à combustion interne (3).
